(19) Europäisches Patentamt / European Patent Office / Office européen des brevets

(11) **EP 2 878 565 B1**

(12) **EUROPÄISCHE PATENTSCHRIFT**

(45) Veröffentlichungstag und Bekanntmachung des Hinweises auf die Patenterteilung:
**27.09.2017   Patentblatt 2017/39**

(51) Int Cl.:
**G01B 21/04** *(2006.01)*        **B66C 13/06** *(2006.01)*
**B66C 13/46** *(2006.01)*        **G01B 11/26** *(2006.01)*

(21) Anmeldenummer: **13194811.9**

(22) Anmeldetag: **28.11.2013**

(54) **Verfahren zur Bestimmung zumindest eines Pendelwinkels und/oder Drehwinkels einer an einem Kran über wenigstens ein seilartiges Befestigungsmittel aufgenommenen Last sowie Verfahren zur Dämpfung von Pendelbewegungen und/oder Drehbewegungen der Last**

Method for determining at least one pendulum angle and/or angle of rotation of a load attached to a crane with at least one rope-based fastening and method for damping the pendular movements and/or rotary movements of the load

Procédé de détermination d'au moins un angle d'oscillation et/ou angle de rotation d'une charge logée au niveau d'une grue via au moins un moyen de fixation de type câble et procédé d'amortissement de mouvements d'oscillation et/ou de mouvements de rotation de la charge

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.06.2015   Patentblatt 2015/23**

(73) Patentinhaber: **Siemens Aktiengesellschaft 80333 München (DE)**

(72) Erfinder:
• **Hamm, Carsten 91058 Erlangen (DE)**
• **Ladra, Uwe 91056 Erlangen (DE)**

(56) Entgegenhaltungen:
**WO-A1-2004/031068**

• **C. Babbage: "Error Analysis and Significant Figures", , 23. Mai 2007 (2007-05-23), XP055108744, Gefunden im Internet: URL:http://www.owlnet.rice.edu/~labgroup/pdf/Error_analysis.htm [gefunden am 2014-03-18]**
• **KONDRATOV V T: "The systematic error correction in measurement transduction of the physical quantities X, X<2> and X<3>", INSTRUMENTATION AND MEASUREMENT TECHNOLOGY CONFERENCE, 1996. IMTC-96. CONFERENCE PROCEEEDINGS. QUALITY MEASUREMENTS: THE INDISPENSABLE BRIDGE BETWEEN THEORY AND REALITY., IEEE BRUSSELS, BELGIUM 4-6 JUNE 1996, NEW YORK, NY, USA,IEEE, US, Bd. 1, 4. Juni 1996 (1996-06-04), Seiten 703-709, XP010163969, DOI: 10.1109/IMTC.1996.507473 ISBN: 978-0-7803-3312-3**
• **B A J De Jong ET AL: "Modelling and observer design of an overhead container crane Confidential Supervisors", , 15. Juli 2005 (2005-07-15), XP055110194, Den Haag Gefunden im Internet: URL:http://www.mate.tue.nl/mate/pdfs/6037. pdf [gefunden am 2014-03-26]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Bestimmung zumindest eines Pendelwinkels und/oder Drehwinkels einer an einem Kran über wenigstens ein seilartiges Befestigungsmittel aufgenommenen Last, wobei der Kran einen Ausleger und eine entlang des Auslegers mittels einer Antriebseinrichtung linear bewegbare Laufkatze aufweist, an welcher die Last über das wenigstens eine seilartige Befestigungsmittel befestigt ist, und an dem Kran wenigstens eine optische Erfassungseinrichtung zur Erfassung eines Pendelwinkels und/oder Drehwinkels der Last vorgesehen ist, bei dem mittels der wenigstens einen optischen Erfassungseinrichtung ein Pendelwinkel und/oder Drehwinkel der Last erfasst wird. Darüber hinaus betrifft die Erfindung ein Verfahren zur Dämpfung von Pendelbewegungen und/oder Drehbewegungen einer an einem Kran über wenigstens ein seilartiges Befestigungsmittel aufgenommenen Last sowie einen Kran.

Zum Umschlagen von Lasten, zum Beispiel von einem Schiff auf einen Lastkraft- oder einen Eisenbahnwagen, kommen Krane, insbesondere sogenannte Containerbrücken, zum Einsatz, die einen im Wesentlichen horizontal orientierten Ausleger sowie eine entlang des Auslegers mittels einer Laufkatzenantriebseinrichtung linear bewegbare Laufkatze aufweisen. Derartige Krane für den Lastumschlag können ferner eine Kranantriebseinrichtung umfassen, über welche der gesamte Kran in der Regel quer zur Bewegungsrichtung der Laufkatze und damit quer zu dem Ausleger verfahrbar ist.

Für einen Transportvorgang wird die umzuschlagende Last, bei welcher es sich um einen Container oder dergleichen handeln kann, über ein bzw. mehrere seilartige Befestigungsmittel an der Laufkatze des Kranes befestigt, bei denen es sich um Seile, Ketten, Bänder oder dergleichen handeln kann. Die Länge der seilartigen Befestigungsmittel ist über ein der Laufkatze zugeordnetes Hubwerk veränderbar. Die Last kann unmittelbar an den seilartigen Befestigungsmitteln befestigt sein. Alternativ können die Befestigungsmittel mit einem Lastaufnahmemittel, z.B. einem sogenannten Spreader, verbunden werden, der wiederum die Last aufnimmt. Der Spreader umfasst hierzu vorteilhaft eine Greifvorrichtung, mit der Lasten unterschiedlicher Abmessungen gegriffen werden können.

Die über die seilartigen Befestigungsmittel und ggf. den Spreader an der Laufkatze hängende Last kann dann unter Verwendung des Hubwerkes angehoben, über eine Bewegung der Laufkatze entlang des Auslegers sowie eine Bewegung des Auslegers bzw. des gesamten Krans insbesondere quer zur Bewegungsrichtung der Laufkatze von dem Schiff an Land oder umgekehrt transportiert und anschließend abgesetzt werden.

Bei einem derartigen Transportvorgang besteht das Problem, dass die seilgeführte Last durch die Bewegung der Laufkatze und gegebenenfalls die Bewegung des Kranes sowie durch äußere Einflüsse, wie etwa Wind, zu verschiedenen schwingungsartigen Bewegungen angeregt wird. Dabei kann die Last zu translatorischen Pendelbewegungen, d.h. Bewegungen in der Art eines Fadenpendels angeregt werden, sowie zu schwingenden Drehbewegungen um eine ihrer Achsen, bei denen sich die Last nach Art eines Rotationspendels bewegt. Bei den letztgenannten rotatorischen Schwingungsbewegungen ist insbesondere die Drehbewegung der Last um die im Wesentlichen Hochachse von Bedeutung, die auch als Skew-Bewegung bezeichnet wird.

Da mit den unterschiedlichen Schwingungsbewegungen der Last Risiken einhergehen, müssen diese beobachtet und gegebenenfalls Gegenmaßnahmen ergriffen werden. Aus dem Stand der Technik sind verschiedene Verfahren vorbekannt, mit denen der aktuelle Pendel- und/oder Drehwinkel einer mittels eines Krans umzuschlagenden, seilgeführten Last erfasst werden kann.

Als Pendelwinkel wird dabei in der Regel der im aktuellen Auslenkungszustand der Last zwischen dem wenigstens einen seilartigen Befestigungsmittel, mit dem diese an der Laufkatze befestigt ist, und der Vertikalen eingeschlossene Winkel, bzw. dessen Projektion in die von der Bewegungsrichtung der Laufkatze und der Vertikalen aufgespannte Ebene gemessen bzw. erfasst. Als Drehwinkel wird der Winkel erfasst, um den die Last, wenn sie eine Drehbewegung um eine ihrer Achsen ausführt, gegenüber einer Nullposition verdreht ist. Führt die Last eine Skew-Bewegung aus, also eine Drehbewegung um ihre Hochachse, so spricht man auch von dem Skew-Winkel.

Zur Erfassung der aktuellen Pendel- bzw. Drehwinkel kommen insbesondere der Kranstruktur zugeordnete optische Erfassungseinrichtungen zum Einsatz, z.B. Kamerasysteme, mit denen die translatorischen und/oder rotatorischen Schwingungsbewegungen der Last beobachtet werden können, wie zum Beispiel aus WO 2004/031068 A1 bekannt ist. Derartige Kamerasysteme umfassen in der Regel eine an der Unterseite der Laufkatze vorgesehene Kamera sowie einen oben auf der Last positionierten, zur Kamera ausgerichteten und für die Bildauswertung erforderlichen Reflektor. Über geeignete Bildverarbeitungsverfahren wird aus den mittels Kamera und Reflektor erstellten Aufnahmen der aktuelle Pendel- und/oder Drehwinkel der Last bestimmt.

Eine Voraussetzung dafür, dass die Kamerasysteme, mit denen der aktuelle Pendel- und/oder Drehwinkel der Last bestimmt wird, zuverlässige Messwerte liefern, ist eine sorgfältige Justage dieser Systeme. Dabei ist es insbesondere erforderlich, dass die an der Laufkatze vorgesehene Kamera und der an der Last vorgesehene Reflektor exakt zueinander ausgerichtet sind.

Diese Voraussetzung ist in dem rauen Betriebsumfeld eines Kranes in der Regel nicht oder nur unter großem Aufwand zu erfüllen. Zum einen bestehen bauliche Einschränkungen die dazu führen, dass die bekannten Kamerasysteme an unzureichenden Positionen montiert werden müssen, wodurch beispielsweise ein ungewollter Versatz zwischen Kamera und Reflektor entsteht. In diesem Fall kommt es zu einem konstanten Offset bei der Messung der aktuellen Lage der Last. Darüber hinaus kann es passieren, dass die Kamera so positioniert wird bzw. werden muss, dass sie unter einem Winkel auf die Last, bzw. auf den an der Oberseite der Last vorgesehenen Reflektor blickt. Auch hier wird die Lage der Last fehlerhaft gemessen, wobei der Fehler abhängig von der Hubhöhe, also der aktuellen Länge des bzw. der seilartigen Befestigungsmittel ist, über welche die Last an der Laufkatze befestigt ist. In allen vorgenannten Fällen wird anstelle des tatsächlichen Pendel- bzw. Drehwinkels ein fehlerhafter Winkel erfasst.

Aus dem Stand der Technik sind verschiedene Vorgehensweisen bekannt, um der vorgenannten Problematik zu begegnen. Zum einen können die verwendeten Kamerasysteme kalibriert werden. Hierzu wird im Rahmen der Inbetriebnahme ein Abgleich durchgeführt, um die Nullposition der Kamera möglichst in Übereinstimmung mit der Nullposition der Last zu bringen. Dies kann beispielsweise durch eine händische Justage des Systems geschehen. Mit einer derartigen Justage ist ein erheblicher Aufwand verbunden und es besteht ferner das Problem, dass die Kalibrierung in der rauen Umgebung des Kranes nur für einen vergleichsweise kurzen Zeitraum erhalten bleibt.

Eine weitere Möglichkeit besteht darin, darauf zu verzichten, absolute Lageinformationen der Last zu messen und lediglich Lagedifferenzen zu bestimmen. Dies bedeutet, dass anstatt der Lage, insbesondere anstelle des aktuellen absoluten Pendel- bzw. Drehwinkels, lediglich über Differenzbildung erhaltene Winkel-Geschwindigkeitswerte erfasst werden. Die auf diese Weise erhaltenen relativen Informationen werden jedoch nicht immer als ausreichend erachtet.

Ausgehend von diesem Stand der Technik ist es eine Aufgabe der vorliegenden Erfindung, ein Verfahren zur Bestimmung zumindest eines Pendel- und/oder Drehwinkels einer an einem Kran über wenigstens ein seilartiges Befestigungsmittel aufgenommenen Last der eingangs genannten Art zu schaffen, mit dem Pendel- und/oder Drehwinkel seilgeführter Lasten zuverlässig bestimmt werden können.

Diese Aufgabe wird bei einem Verfahren zur Bestimmung zumindest eines Pendelwinkels und/oder Drehwinkels einer an einem Kran über wenigstens ein seilartiges Befestigungsmittel aufgenommenen Last der eingangs genannten Art dadurch gelöst, dass

- angenommen wird, dass der erfasste Pendelwinkel und/oder Drehwinkel mit einem durch die wenigstens eine optischen Erfassungseinrichtung bedingten systematischen Fehler behaftet ist, und
- der Wert des systematischen Fehlers, mit dem der erfasste Pendelwinkel und/oder Drehwinkel behaftet ist, ermittelt wird.

Mit anderen Worten besteht der Grundgedanke der vorliegenden Erfindung darin, gezielt davon auszugehen, dass der mittels der wenigstens einen konventionellen optischen Erfassungseinrichtung erfasste aktuelle Pendelwinkel und/oder Drehwinkelwert der Last fehlerbehaftet ist. Dabei wird erfindungsgemäß angenommen, dass der Fehler durch die für die Winkelerfassung verwendete Einrichtung, bei der es sich z.B. um ein Kamerasystem handeln kann, selbst bedingt wird. Konkret wird davon ausgegangen, dass durch eine unzureichende Einbauposition der Komponenten der wenigstens einen verwendeten optischen Einrichtung, insbesondere durch eine unzureichende Einbauposition von Kamera und/oder Reflektor, bzw. eine unzureichende bzw. fehlerhafte Justage dieser Komponenten zueinander, ein systematischer Fehler verursacht wird, um den die erfassten Winkelwerte von den tatsächlichen abweichen. Bei dem systematischen Fehler handelt es sich insbesondere um einen Offset, also um einen Versatz des gemessen gegenüber dem tatsächlich zu erfassenden Winkelwertes.

Ausgehend von der Annahme, dass die erfassten Winkelwerte nicht die tatsächlichen sind, wird dann erfindungsgemäß der Wert des systematischen Fehlers ermittelt.

Erfindungsgemäß erfolgt die Annahme, dass der erfasste Pendelwinkel und/oder Drehwinkel mit einem systematischen Fehler behaftet ist, indem ein mathematisches Modell zum Einsatz kommt, in dem berücksichtigt ist, dass der Pendelwinkel bzw. der Drehwinkel einen Fehler aufweisen kann.

Das erfindungsgemäße Verfahren kann unabhängig davon, ob der Pendel- und/oder Drehwinkel der Last tatsächlich mit einem systematischen Fehler behaftet ist oder nicht, angewendet werden. Für den Fall, dass die verwendete optische Erfassungseinrichtung korrekt justiert ist, würde z.B. als Wert des systematischen Fehlers Null oder ein Wert unterhalb eines vorgegebenen Schwellwertes ermittelt. Das erfindungsgemäße Verfahren kann demzufolge auch angewendet werden, um herauszufinden, ob eine optische Erfassungseinrichtung an einem Kran fehlerhaft justiert ist, oder nicht.

Eine vorteilhafte Ausführungsform des erfindungsgemäßen Verfahrens zeichnet sich dadurch aus, dass der fehlerfreie Pendelwinkel und/oder Drehwinkel ermittelt wird.

Ist erfindungsgemäß der Wert des systematischen Fehlers, mit dem der Pendelwinkel bzw. der Drehwinkel der Last behaftet ist, ermittelt worden, so kann der erfasste Pendelwinkel bzw. Drehwinkel von dem ermittelten systematischen Fehler bereinigt werden und so der tatsächliche, fehlerfreie Pendelwinkel bzw. Drehwinkel der Last erhalten werden.

Durch diese erfindungsgemäße Fehlerbereinigung kann auf eine aufwendige händische Justage der verwendeten wenigstens einen optischen Einrichtung vollständig verzichtet werden, wodurch Zeit und somit Kosten in erheblichem Maße eingespart werden.

Es kann sogar bei der Installation der wenigstens einen optischen Erfassungseinrichtung an der Kranstruktur bewusst eine fehlerhafte Montage bzw. Justage zugelassen werden, da der hierdurch bedingte systematische Messfehler ermittelt und der gemessene Winkelwert von diesem befreit werden kann. So wird es möglich, die optischen Erfassungseinrichtungen auch an vom Stand der Technik abweichenden Stellen vorzusehen, die z.B. leichter zugänglich sind, wodurch ebenfalls Zeit und Kosten eingespart werden.

Das erfindungsgemäße Verfahren kann sowohl zur Bestimmung aktueller Pendelwinkel der Last, als auch zur Bestimmung aktueller Drehwinkel derselben durchgeführt werden. Dabei ist insbesondere der Drehwinkel der Last um ihre Hochachse von Interesse, also der sogenannte Skew-Winkel.

Zur Erfassung der Pendel- bzw. Drehwinkel der Last können eine bzw. mehrere konventionelle optische Erfassungseinrichtungen zum Einsatz kommen, die insbesondere jeweils eine Kamera und einen Reflektor umfassen. Es kann z.B. eine Erfassungseinrichtung verwendet werden, die sowohl den aktuellen Pendel- als auch einen aktuellen Drehwinkel, insbesondere den aktuellen Skew-Winkel der Last erfasst. Alternativ kann auch für die Pendel- und Drehwinkelerfassung jeweils eine gesonderte Erfassungseinrichtung zum Einsatz kommen. Die optische Erfassungseinrichtung bzw. die optischen Erfassungseinrichtungen beobachten die Schwingungsbewegungen der Last, wobei in an sich bekannter Weise Bildverarbeitungsverfahren zum Einsatz kommen, um aus den optischen Aufnahmen die Werte des aktuellen Pendel- bzw. Drehwinkel zu erhalten.

Eine Ausführungsform der Erfindung zeichnet sich dadurch aus, dass mittels der wenigstens einen optischen Erfassungseinrichtung eine der zeitlichen Ableitungen des Pendelwinkels und/oder Drehwinkels erfasst wird. Hierbei kann z.B. die erste zeitliche Ableitung des Pendelwinkels bzw. Drehwinkels, also die Pendel- bzw. Drehwinkelgeschwindigkeit erfasst werden. Dies kann beispielsweise erfolgen, indem die Differenz zweier zeitlich beabstandeter Aufnahmen des aktuellen Auslenkungszustandes der Last gebildet wird.

Gemäß einer weiteren Ausführungsform der Erfindung wird angenommen, dass der mit der wenigstens einen optischen Erfassungseinrichtung erfasste Pendelwinkel gleich der Summe aus dem fehlerfreien Pendelwinkel und einem Fehlerwert ist und/oder der mit der wenigstens einen optischen Erfassungseinrichtung erfasste Drehwinkel gleich der Summe aus dem fehlerfreien Drehwinkel und einem Fehlerwert ist.

Bei den Pendel- bzw. Drehbewegungen der Last handelt es sich um Schwingungsbewegungen, die allgemeingültig durch eine Differentialgleichung zweiter Ordnung der Form

$$\ddot{z}(t) + \omega^2 \, z(t) = \omega^2 u$$

beschrieben werden können. Dabei ist z(t) die betrachtete Größe, also der Pendel- bzw. Drehwinkel, $\omega$ die Eigenfrequenz der Schwingungsbewegung und u(t) die Stellgröße, bei der es sich z.B. um die Position der Laufkatze handeln kann.

Die Eigenkreisfrequenz $\omega$ der schwingenden Dreh- und/oder Pendelbewegung der Last kann bei mechanischen Systemen auf einfache Weise durch Schwingversuche, Modellrechnungen oder andere aus dem Stand der Technik bekannte Verfahren ermittelt werden. Bei der schwingenden Pendelbewegung in der Art eines Fadenpendels wird die Eigenkreisfrequenz allein durch die aktuelle Länge des wenigstens einen seilartigen Befestigungsmittels, also die aktuelle Hubhöhe der Last bestimmt. Diese Größe wird bei Kransystemen messtechnisch erfasst und steht somit zur Bestimmung der Eigenkreisfrequenz zur Verfügung. Erfindungsgemäß wird davon ausgegangen, dass aufgrund des durch die nicht exakte Ausrichtung bzw. Justage der wenigstens einen optischen Erfassungseinrichtung, mittels derer der aktuelle Pendel- bzw. Drehwinkel gemessen bzw. erfasst wird, anstelle des wahren Winkelwertes z(t) eine mit einem systematischen Fehler $z_{off}$ behaftete Größe

$$\tilde{z}(t) = z(t) + z_{off}$$

misst. Es wird folglich gemäß der vorliegenden Erfindung das Wissen über die Schwingungseigenschaften der Last, die mathematisch über die vorgenannte Differentialgleichung beschrieben werden können, mit einem Fehlermodell für den unbekannten Fehler, der durch eine fehlerhafte Positionierung und/oder Justage der verwendeten optischen Einrichtung bedingt ist, kombiniert.

Dabei kann in Weiterbildung der Erfindung insbesondere vorgesehen sein, dass angenommen wird, dass der systematische Fehler, mit dem der erfasste Pendelwinkel und/oder Drehwinkel behaftet ist, zeitlich konstant ist oder sich quasistatisch in Abhängigkeit der Länge des wenigstens einen seilartigen Befestigungsmittels, über welches die Last an der Laufkatze befestigt ist, ändert. Es wird also davon ausgegangen, dass der Fehler $z_{off}$ entweder über die Zeit gleich bleibt oder sich nur niederfrequent in Abhängigkeit der Hubhöhe der Last ändert.

Mit dem erfindungsgemäßen Verfahren können neben zeitlich nicht veränderlichen Fehlern, die beispielsweise dadurch verursacht werden, dass die Kamera der optischen Erfassungseinrichtung um einen Versatz gegenüber dem Reflektor angeordnet ist - auch zeitlich veränderliche Fehler, insbesondere Fehler, die von der Hubhöhe der Last abhängen, ermittelt werden. Zeitlich veränderliche Fehler dieser Art kommen z.B. dadurch zustande, dass die Kamera in einem Winkel auf den Reflektor ausgerichtet ist. Damit können mit dem erfindungsgemäßen Verfahren auch zeitvariante Fehler kompensiert werden.

Eine weitere vorteilhafte Ausgestaltung des erfindungsgemäßen Verfahrens zeichnet sich dadurch aus, dass wenigstens ein regelungstechnisches Beobachtermodell verwendet wird, um den Wert des systematischen Fehlers, mit dem der gemessene Pendel- und/oder Drehwinkel behaftet ist, und/oder den fehlerfreien Pendelwinkel und/oder fehlerfreien Drehwinkel zu ermitteln.

Die Verwendung von Beobachtermodellen, auch Beobachter genannt, ist im Bereich der Regelungstechnik bekannt. Mit einem Beobachter können aus bekannten Eingangsgrößen, z.B. Stellgrößen, und bekannten Ausgangsgrößen, z.B. Messgrößen, eines beobachteten Referenzsystems Zustände rekonstruiert werden. Man spricht auch davon, dass die Zustände beobachtbar sind. Beobachter kommen beispielsweise im Rahmen der Modellierung von Regelstrecken zum Einsatz. Das physikalische Verhalten einer realen Regelstrecke kann über Differenzialgleichungen mathematisch modelliert werden. Diese sind in der Regel linear oder linearisiert und können als System von Differentialgleichungen erster Ordnung in Matrixschreibweise ausgedrückt werden. Da das mathematische Modell und das Verhalten der realen Regelstrecke nicht exakt übereinstimmen, entwickeln sich diese jedoch mit der Zeit unterschiedlich. Die Beobachter-Theorie führt nun eine Rückführung zum Abgleich des mathematischen Modells mit der realen Regelstrecke ein.

In Weiterbildung der vorliegenden Erfindung kann vorgesehen sein, dass wenigstens ein regelungstechnisches Beobachtermodell verwendet wird, welches um ein Fehlermodell erweitert ist. Ein erfindungsgemäß auf diese Weise erweitertes Beobachtermodell ist besonders geeignet, um den systematischen Fehler, der durch die verwendete wenigstens eine optische Erfassungseinrichtung bedingt ist und den fehlerfreien Pendel- bzw. Drehwinkel zu ermitteln.

Dabei kann insbesondere vorgesehen sein, dass wenigstens ein regelungstechnisches Beobachtermodell verwendet wird, in dem das Fehlermodell mit Bewegungsgleichungen für Pendelbewegungen und/oder Drehbewegungen der Last kombiniert ist.

Eine weitere vorteilhafte Ausführungsform des erfindungsgemäßen Verfahrens zeichnet sich ferner dadurch aus, dass ein regelungstechnisches Beobachtermodell verwendet wird, welches zumindest den Pendelwinkel, eine der zeitlichen Ableitungen des Pendelwinkels und den systematischen Fehler, mit dem der Pendelwinkel behaftet ist, als Zustandsgrößen umfasst und/oder ein regelungstechnisches Beobachtermodell verwendet wird, welches zumindest den Drehwinkel, eine der zeitlichen Ableitungen des Drehwinkels und den systematischen Fehler, mit dem der Drehwinkel behaftet ist, als Zustandsgrößen umfasst.

Das erfindungsgemäß zum Einsatz kommende Beobachtersystem wird vorteilhaft in Zustandsdarstellung betrachtet. Davon ausgehend, dass z(t) die zu betrachtende Größe, nämlich der Pendel- bzw. Drehwinkel ist, erhält man in Zustandsdarstellung

$$\dot{x}(t) = Ax(t) + bu(t)$$

$$y(t) = Cx(t)$$

mit dem Zustandsvektor x(t), den Ausgangssignalen y(t), den Eingangssignalen u(t), der Systemmatrix A, der Ausgangsmatrix C und dem Eingangsvektor b. Konkret erhält man

$$\underbrace{\begin{bmatrix} \dot{z}(t) \\ \ddot{z}(t) \\ \dot{z}_{off}(t) \end{bmatrix}}_{} = \underbrace{\begin{bmatrix} 0 & 1 & 0 \\ -\omega^2 & 0 & 0 \\ 0 & 0 & 0 \end{bmatrix}}_{=A} \underbrace{\begin{bmatrix} z(t) \\ \dot{z}(t) \\ z_{off}(t) \end{bmatrix}}_{=x(t)} + \underbrace{\begin{bmatrix} 0 \\ \omega^2 \\ 0 \end{bmatrix}}_{=b} u(t)$$

und

$$\underbrace{\begin{bmatrix} \tilde{z} \\ \dot{z} \end{bmatrix}}_{=y(t)} = \underbrace{\begin{bmatrix} 1 & 0 & 1 \\ 0 & 1 & 0 \end{bmatrix}}_{=C} \begin{bmatrix} z(t) \\ \dot{z}(t) \\ z_{off}(t) \end{bmatrix}$$

Der Zustandsvektor x(t) ist demgemäß um den Fehler $z_{off}$, der erfindungsgemäß angenommen wird, erweitert.

Der Rang der Beobachtbarkeitsmatrix

$$Q = \begin{bmatrix} C \\ CA \\ CA^2 \end{bmatrix} = \begin{bmatrix} 1 & 0 & 1 \\ 0 & 1 & 0 \\ 0 & 1 & 0 \\ -\omega^2 & 0 & 0 \\ -\omega^2 & 0 & 0 \\ 0 & -\omega^2 & 0 \end{bmatrix}$$

ist 3, damit sind alle drei Zustandsgrößen, also z, $\dot{z}$ und $z_{off}$ aus dem erweiterten Modell fehlerfrei ermittelbar, also auch der Offset.

Für den Einsatz in einer Regelungsstruktur ist noch die Beobachterdynamik zu entwerfen, d.h. die Dynamik, mit der Fehler zwischen Modell und Realität abgebaut werden. Dies ist ein Standardvorgehen in der Regelungstechnik, was unter Heranziehung eines der aus dem Stand der Technik bekannten Verfahren ohne Einschränkung möglich ist.

Eine Beobachterstruktur gemäß

$$\dot{x}(t) = Ax(t) + bu(t) + L(y_m(t) - y(t)) = (A - LC)x(t) + bu(t) + Ly_m(t)$$

mit der Rückführmatrix L, vergleicht die Messgrößen, die mittels wenigstens einer optischen Erfassungseinrichtung samt zugehörigem Bildverarbeitungsverfahren erfasst werden, nämlich den erfassten Pendel- bzw. Drehwinkel $z_{cam}(t)$

$$y_m(t) = \begin{bmatrix} z_{cam}(t) \\ \dot{z}_{cam}(t) \end{bmatrix}$$

mit den ermittelten Größen *y(t)* und führt die Zustandsgrößen *x(t)* über die geeignet zu dimensionierende Rückführmatrix L nach. Dabei steht $z_{cam}(t)$ für den mittels der optischen Erfassungseinrichtung erfassten Pendel- bzw. Drehwinkel und $\dot{z}_{cam}(t)$ für die Pendel- bzw. Drehwinkelgeschwindigkeit. $y_m(t)$ ist der Vektor der Messgrößen, die von der Strecke kommen.

Aus den zwei Messgrößen Winkelgeschwindigkeit $\dot{z}_{cam}$ und fehlerbehaftetem Winkelwert $z_{cam}$ der Kamera werden so im Zustandsvektor *x(t)* des Beobachters die drei benötigten Größen Winkelgeschwindigkeit $\dot{z}$, tatsächlicher, vom Fehler befreiter Winkel z und der Fehler $z_{off}$ ermittelt.

Diese Größen können anschließend insbesondere im Rahmen einer schwingungsdämpfenden Regelung für die Bewegung der seilgeführten Last verwendet werden. Die erfindungsgemäß ermittelte Fehlergröße $z_{off}$ gibt das Maß des vorherrschenden Fehlers wider.

Gemäß der vorliegenden Erfindung wird es unter Anwendung wenigstens eines um das Fehlermodell erweiterten Beobachtermodells mit dem zuvor beschriebenen Modellansatz möglich, die Zustandsgrößen, welche für eine schwingungsdämpfende Regelung erforderlich sind, nämlich insbesondere einen tatsächlichen aktuellen Pendel- und/oder Drehwinkel sowie die Pendel- und/oder Drehwinkelgeschwindigkeit, zu identifizieren. Es kann robust und zuverlässig die fehlende Information über den auf die wenigstens eine verwendete optische Erfassungseinrichtung bzw. deren mangelhafter Einbau und/oder deren mangelhafte Justage verursachten Fehler ermittelt werden.

Ein weiterer Gegenstand des vorliegenden Erfindung ist gegeben durch ein Verfahren zur Dämpfung von Pendelbewegungen und/oder Drehbewegungen einer an einem Kran über wenigstens ein seilartiges Befestigungsmittel aufgenommenen Last, wobei der Kran einen Ausleger und eine entlang des Auslegers mittels einer Antriebseinrichtung linear bewegbare Laufkatze aufweist, an welcher die Last über das wenigstens eine seilartige Befestigungsmittel befestigt ist, und an dem Kran wenigstens eine optische Erfassungseinrichtung zur Erfassung eines Pendel- und/oder Drehwinkels der Last vorgesehen ist, und wobei dem Kran wenigstens eine Regelungseinrichtung zur Dämpfung von Pendelbewegungen und/oder Drehbewegungen der Last zugeordnet ist, umfassend die Schritte:

- über das zuvor beschriebene erfindungsgemäße Verfahren zur Bestimmung zumindest eines Pendelwinkels und/oder Drehwinkels wird der fehlerfreie Pendelwinkel und/oder der Wert des systematischen Fehlers, mit dem der erfasste Pendelwinkel behaftet ist, ermittelt und/oder über das zuvor beschriebene erfindungsgemäße Verfahren zur Bestimmung zumindest eines Pendelwinkels und/oder Drehwinkels wird der fehlerfreie Drehwinkel und/oder der Wert des systematischen Fehlers, mit dem der Drehwinkel behaftet ist, ermittelt,
- der fehlerfreie Pendelwinkel und/oder der Wert des Fehlers, mit dem der erfasste Pendelwinkel behaftet ist, wird an die wenigstens Regelungseinrichtung übergeben, und/oder der fehlerfreie Drehwinkel und/oder der Wert des Fehlers, mit dem der erfasste Drehwinkel behaftet ist, wird an die selbe oder eine weitere Regelungseinrichtung übergeben, und

• mittels der wenigstens einen Regelungseinrichtung wird auf Basis des fehlerfreien Pendelwinkels und/oder des Wertes des Fehlers, mit dem der erfasste Pendelwinkel behaftet ist die Pendelbewegung der Last gedämpft und/oder auf Basis des fehlerfreien Drehwinkels und/oder des Wertes des Fehlers, mit dem der erfasste Drehwinkel behaftet ist, die Drehbewegung der Last gedämpft.

Mit anderen Worten wird der erfindungsgemäß von dem systematischen Fehler befreite Pendel- bzw. Drehwinkel anstelle der fehlerbehafteten Größe für eine nachfolgende regelungstechnische Maßnahme zur Dämpfung der Schwingungsbewegungen der Last verwendet. Hierzu wird der von dem systematischen Fehler befreite Pendel- bzw. Drehwinkel an wenigstens eine Regelungseinrichtung weitergegeben, die ausgebildet ist, um die beobachteten Pendel- und/oder Drehbewegungen der Last zu dämpfen. Auf Basis des tatsächlichen, fehlerbefreiten Winkelwertes kann die Regelungseinrichtung z.B. in an sich bekannter Weise ein Stellsignal für die Laufkatzenantriebseinrichtung ermitteln, so dass diese derart gesteuert wird, dass die fadenpendelartige Bewegung der Last in der von der Bewegungsrichtung der Laufkatze und der Vertikalen aufgespannten Ebenen gezielt gedämpft wird.

Wird, wie im Stand der Technik üblich, der mit der wenigstens einen optischen Erfassungseinrichtung erfasste fehlerhafte Pendel- bzw. Drehwinkelwert an eine Regelungseinrichtung übergeben, so erfolgt die Regelung auf einen falschen Winkel. Es wird dann insbesondere aufgrund des Messfehlers die Last auf eine falsche Position eingestellt. Ändert sich der Messfehler mit der Zeit, so wird die Bewegung der Last sogar derart geregelt, dass die Last dem Fehler folgt. Wird das erfindungsgemäße Verfahren angewendet, wird diese Problematik gänzlich vermieden.

Bei dem erfindungsgemäßen Verfahren zur Dämpfung von Pendelbewegungen und/oder Drehbewegungen der Last ist in Weiterbildung vorgesehen, dass zusätzlich eine der zeitlichen Ableitungen des Pendelwinkels und/oder Drehwinkels, insbesondere die Pendelwinkelgeschwindigkeit und/oder Drehwinkelgeschwindigkeit, ermittelt und an die wenigstens eine Regelungseinrichtung übergeben wird.

Schließlich ist ein Gegenstand der vorliegenden Erfindung ein Kran mit einem Ausleger, mit einer entlang des Auslegers mittels einer Antriebseinrichtung linear bewegbaren Laufkatze, an welcher eine Last über wenigstens ein seilartiges Befestigungsmittel befestigt ist, mit wenigstens einer optischen Erfassungseinrichtung zur Erfassung eines Pendelwinkels und/oder Drehwinkels der Last, mit wenigstens einer Recheneinrichtung, welche ausgebildet ist, um das zuvor beschriebene erfindungsgemäße Verfahren zur Bestimmung zumindest eines Pendelwinkels und/oder Drehwinkels durchzuführen und mit wenigstens einer Regelungseinrichtung, die ausgebildet ist, um auf Basis des über das Verfahren ermittelten fehlerfreien Pendel- und/oder Drehwinkels die Pendel- und/oder Drehbewegung der Last zu dämpfen.

Mit dem erfindungsgemäßen Kran können die zuvor beschriebenen erfindungsgemäßen Verfahren konstruktiv umgesetzt werden.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt

Figur 1      einen erfindungsgemäßen Kran mit einem Ausleger und einer entlang des Auslegers verfahrbaren Laufkatze, an der eine Last über seilartige Befestigungsmittel befestigt ist, und

Figur 2      eine vergrößerte Darstellung der in Figur 1 gezeigten Laufkatze mit einer optischen Erfassungseinrichtung, und

Figur 3      die in Figur 1 dargestellte Last in der Draufsicht.

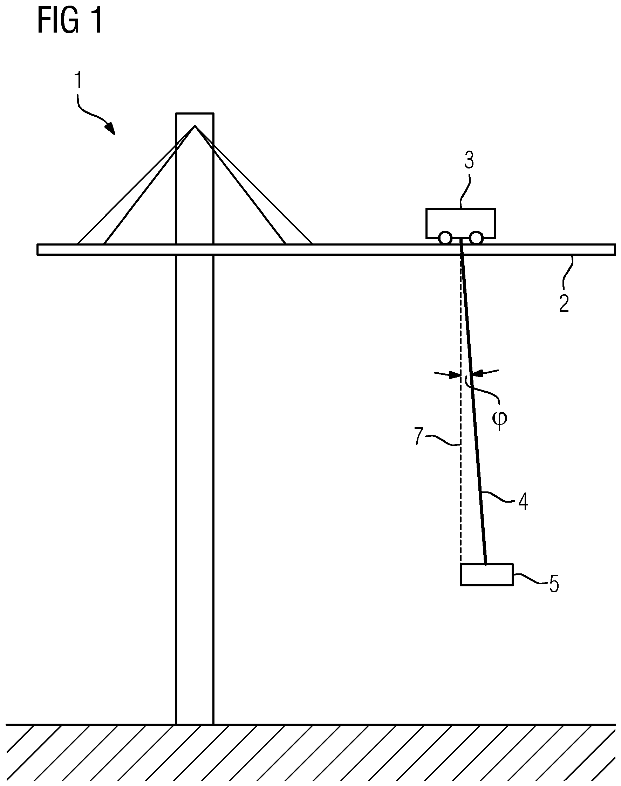

Die Figur 1 zeigt einen Kran 1, hier eine Containerbrücke, die einen im Wesentlichen horizontal verlaufenden Ausleger 2 sowie eine entlang des Auslegers 2 verfahrbare Laufkatze 3 umfasst. Der Laufkatze 3 ist eine in der Figur nicht dargestellte Antriebseinrichtung zugeordnet, über welche diese entlang des Auslegers 2 in beide Richtungen bewegbar ist.

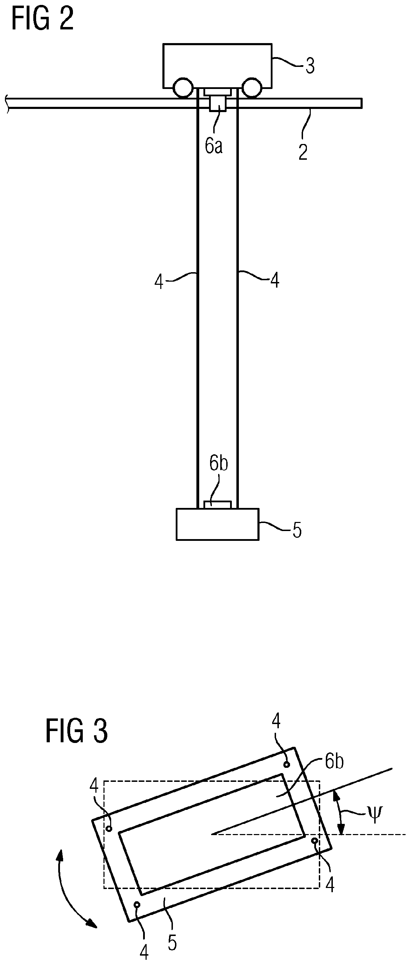

An der Laufkatze 3 ist über seilartige Befestigungsmittel, hier vier Seile 4, eine Last, bei der es sich in dem dargestellten Ausführungsbeispiel um einen Container 5 handelt, befestigt. Der Container 5 ist von einem in der Figur nicht dargestellten Schiff zu einem ebenfalls nicht dargestellten Lastkraftwagen zu transportieren. Die vier Seile 4, die in Figur 1 schematisch durch nur ein Seil 4 angedeutet sind, sind in der in Figur 3 dargestellten Aufsicht des Containers 5 gut erkennbar. Die Seile 4 sind an einem in den Figuren nicht dargestellten Lastaufnahmemittel, einem Spreader befestigt, der an der Oberseite des Containers 5 vorgesehen ist. Die Länge der Seile 4 kann mittels eines in der Figur nicht dargestellten Hubwerkes verändert werden, um den Container 5 anzuheben, abzusetzen bzw. Hindernisse entlang des Transportweges zu überwinden.

Im Rahmen des Transportvorganges unterliegt der über die Seile 4 an der Laufkatze 3 befestigte Container 5 infolge der Bewegung der Laufkatze 3, des Kranes 1 sowie äußerer Einflüsse, wie etwa Wind, Schwingungsbewegungen unterschiedlicher Art. Der Container 5 kann dabei sowohl zu translatorischen Schwingungsbewegungen, d.h. Bewegungen in der Art eines Fadenpendels, als auch zu schwingende Drehbewegungen um eine seiner Achsen angeregt werden, also Bewegungen in der Art eines Rotationspendels. Vorliegend ist, was die rotatorischen Bewegungen angeht, insbesondere die schwingende Drehbewegung des Containers 5 um seine Hochachse von Bedeutung, die auch als Skew-Bewegung bezeichnet wird.

Da mit den unterschiedlichen Schwingungsbewegungen des Containers 5 Risiken einhergehen, müssen diese beobachtet und gegebenenfalls Gegenmaßnahmen ergriffen werden.

Die Bewegungen des Containers 5 werden daher mit einer an dem Kran 1 vorgesehenen optischen Erfassungseinrichtung 6 beobachtet. Die optische Erfassungseinrichtung 6 umfasst eine an der Unterseite der Laufkatze 3 vorgesehene Kamera 6a sowie einen an der Oberseite des Containers 5 vorgesehenen Reflektor 6b. Mit Hilfe eines Bildverarbeitungsverfahrens wird in an sich bekannter Weise aus den mit der Kamera 6a von dem Container 5 bzw. dem an dessen Oberseite vorgesehenen Reflektor 6b gemachten Aufnahmen der aktuelle Auslenkungszustand des Containers 5 gemessen. Dabei wird der aktuelle Pendelwinkel φ und der aktuelle Skew-Winkel ψ des Containers 5 erfasst.

Der aktuelle Pendelwinkel φ ist der im aktuellen Auslenkungszustand des Containers 5 zwischen den Seilen 4 und der Vertikalen 7 eingeschlossene Winkel, bzw. dessen Projektion in die von der Bewegungsrichtung der Laufkatze 3 und der Vertikalen 7 aufgespannten Ebene. Der Skew-Winkel ψ ist, wie in der Figur 3 dargestellt, der Winkel, um den der Container 5, wenn er eine schwingende Drehbewegung um seine Hochachse ausführt, gegenüber einer Nullposition verdreht ist.

Die Kamera 6a und der Reflektor 6b der optischen Erfassungseinrichtung 6 sind vorliegend fehlerhaft montiert bzw. nicht ausreichend justiert. Konkret ist die Kamera 6a nicht genau gegenüber dem Reflektor 6b angeordnet, sondern in einem Versatz zu diesem. Ferner blickt die Kamera 6a nicht orthogonal auf den Reflektor 6b, sondern unter einem Winkel. Infolge der fehlerhaften Einbauposition und Orientierung der Kamera 6a wird mit der optischen Erfassungseinrichtung 6 anstatt des tatsächlichen aktuellen Pendelwinkels φ und Skew-Winkels ψ ein mit einem systematischen Fehler behafteter Wert dieser Größen erfasst.

Mittels der optischen Erfassungseinrichtung 6 wird ferner die Pendelwinkelgeschwindigkeit $\dot{\varphi}$ und Drehwinkelgeschwindigkeit $\dot{\psi}$ erfasst, indem die Differenz von zwei zeitlich beabstandeten Messungen des Pendelwinkels φ bzw. die Differenz von zeitlich beabstandeten Messungen des Skew-Winkels ψ gebildet wird. Die Geschwindigkeitswerte sind nicht fehlerbehaftet, da der systematische Fehler aufgrund der Differenzbildung wegfällt.

Zur Bestimmung des tatsächlichen aktuellen Pendelwinkels φ und des tatsächlichen aktuellen Skew-Winkels ψ des Containers 5 wird das erfindungsgemäße Verfahren zur Bestimmung zumindest eines Pendel- und/oder Drehwinkels durchgeführt.

Die für die Durchführung des erfindungsgemäßen Verfahrens erforderlichen Berechnungen werden dabei mittels einer in den Figuren nicht dargestellten, dem Kran 1 zugeordneten Recheneinrichtung, die vorliegend einen konventionellen Prozessor umfasst, absolviert.

Da das erfindungsgemäße Verfahren sowohl zur Bestimmung des tatsächlichen aktuellen Pendelwinkels des Containers 5 als auch zur Bestimmung des tatsächlichen aktuellen Skew-Winkels des Containers 5 angewendet wird, sind die Berechnungen einerseits für den Pendelwinkel und andererseits für den Skew-Winkel durchzuführen.

Bei den Pendel- bzw. Drehbewegungen des Containers 5 handelt es sich um Schwingungsbewegungen, die allgemeingültig durch eine Differentialgleichung zweiter Ordnung der Form

$$\ddot{z}(t) + \omega^2 \, z(t) = \omega^2 u$$

beschrieben werden können. Dabei ist z(t) die betrachtete Größe, vorliegend einerseits der Pendelwinkel φ bzw. andererseits der Skew-Winkel ψ. ω ist die Eigenfrequenz der Pendel- bzw. Skew-Bewegung des Containers 5 und u(t) die Stellgröße, bei der es sich z.B. um die Position der Laufkatze 3 handeln kann.

Erfindungsgemäß wird zunächst angenommen, dass der mit der optischen Erfassungseinrichtung 6 erfasste Pendelwinkel φ und der erfasste Skew-Winkel ψ jeweils gleich der Summe aus dem fehlerfreien Pendel- bzw. Skew-Winkel ψ und einem Fehlerwert ist. Konkret wird davon ausgegangen, dass aufgrund der nicht exakten Ausrichtung bzw. Justage der optischen Erfassungseinrichtung 6 anstelle des wahren Winkelwertes z(t), also des Pendelwinkels φ bzw. des Skew-Winkels ψ eine mit einem systematischen Fehler $z_{off}$ behaftete Größe

$$\tilde{z}(t) = z(t) + z_{off}$$

gemessen wird. Die Größe

$$\tilde{z}(t)$$

ist also der mit der optischen Erfassungseinrichtung 6 gemessene Pendelwinkel φ bzw. Skew-Winkel ψ.

Es wird weiterhin angenommen, dass sich der systematische Fehler, mit dem der Pendelwinkel und der Skew-Winkel behaftet sind, quasistatisch in Abhängigkeit der Länge der Seile 4 ändert.

Die Eigenkreisfrequenz der Pendelbewegung des Containers 5 wird vorliegend aus der aktuellen Hubhöhe des Containers 5, die messtechnisch erfasst wird, berechnet, und die Eigenfrequenz der Skew-Bewegung wird durch Schwingversuche ermittelt.

Um den systematischen Fehler, mit dem der gemessene Pendelwinkel φ und der gemessene Skew-Winkel ψ behaftet sind, und den fehlerfreien Pendelwinkel φ und Skew-Winkel ψ zu ermitteln, werden in dem dargestellten Ausführungsbeispiel regelungstechnische Beobachtermodelle verwendet, welche um ein Fehlermodell erweitert sind. Das Fehlermodell ist dabei jeweils mit den Bewegungsgleichungen für die Pendel- bzw. die Skew-Bewegung des Containers 5 kombiniert. Vorliegend kommt ein erweitertes Beobachtermodell für die Bestimmung des fehlerfreien Pendelwinkels φ und ein erweitertes Beobachtermodell für die Bestimmung des fehlerfreien Skew-Winkels ψ zum Einsatz. Die erfindungsgemäß erweiterten Beobachtermodelle sind in der dem Kran 1 zugeordneten, in den Figuren nicht dargestellten Recheneinrichtung abgelegt.

Das regelungstechnische Beobachtermodell für die Berechnung des fehlerfreien Pendelwinkels φ umfasst den Pendelwinkel φ, eine der zeitlichen Ableitungen des Pendelwinkels φ und den systematischen Fehler, mit dem der Pendelwinkel φ behaftet ist, als Zustandsgrößen. Das regelungstechnische Beobachtermodell zur Berechnung des fehlerfreien Skew-Winkels umfasst in gleicher Weise als Zustandsgrößen den Skew-Winkel ψ, eine der zeitlichen Ableitungen des Skew-Winkels ψ und den systematischen Fehler, mit dem der Skew-Winkel ψ behaftet ist.

Davon ausgehend, dass z(t) die zu betrachtende Größe, also vorliegend der Pendel- bzw. Skew-Winkel φ, ψ ist, erhält man in Zustandsdarstellung

$$\dot{x}(t) = Ax(t) + bu(t)$$

$$y(t) = Cx(t)$$

mit dem Zustandsvektor x(t). Konkret erhält man

$$\begin{bmatrix} \dot{z}(t) \\ \ddot{z}(t) \\ \dot{z}_{off}(t) \end{bmatrix} = \underbrace{\begin{bmatrix} 0 & 1 & 0 \\ -\omega^2 & 0 & 0 \\ 0 & 0 & 0 \end{bmatrix}}_{=A} \underbrace{\begin{bmatrix} z(t) \\ \dot{z}(t) \\ z_{off}(t) \end{bmatrix}}_{=x(t)} + \underbrace{\begin{bmatrix} 0 \\ \omega^2 \\ 0 \end{bmatrix}}_{=b} u(t)$$

und

$$\underbrace{\begin{bmatrix} \tilde{z} \\ \dot{\tilde{z}} \end{bmatrix}}_{=y(t)} = \underbrace{\begin{bmatrix} 1 & 0 & 1 \\ 0 & 1 & 0 \end{bmatrix}}_{=C} \begin{bmatrix} z(t) \\ \dot{z}(t) \\ z_{off}(t) \end{bmatrix}$$

Der Zustandsvektor x(t) ist demgemäß um den Fehler z_{off}, der erfindungsgemäß angenommen wird, erweitert.

Der Rang der Beobachtbarkeitsmatrix

$$Q = \begin{bmatrix} C \\ CA \\ CA^2 \end{bmatrix} = \begin{bmatrix} 1 & 0 & 1 \\ 0 & 1 & 0 \\ 0 & 1 & 0 \\ -\omega^2 & 0 & 0 \\ -\omega^2 & 0 & 0 \\ 0 & -\omega^2 & 0 \end{bmatrix}$$

ist 3, damit sind alle drei Zustandsgrößen, also z, $\dot{z}$ und $z_{off}$ aus dem erweiterten Modell fehlerfrei ermittelbar. Für den Einsatz in einer Regelungsstruktur ist noch die Beobachterdynamik zu entwerfen.

Eine Beobachterstruktur gemäß

$$\dot{x}(t) = Ax(t) + bu(t) + L(y_m(t) - y(t)) = (A - LC)x(t) + bu(t) + Ly_m(t)$$

mit der Rückführmatrix L, vergleicht die Messgrößen, die von der Kamera 6a einschließlich des zugehörigen Bildverarbeitungsverfahrens kommen

$$y_m(t) = \begin{bmatrix} z_{cam}(t) \\ \dot{z}_{cam}(t) \end{bmatrix}$$

mit den ermittelten Größen *y(t)* und führt die Zustandsgrößen *x(t)* über die geeignet zu dimensionierende Rückführmatrix L nach. Dabei steht $z_{cam}(t)$ für den mittels der Kamera 6a erfassten Pendel- bzw. Drehwinkel und $\dot{z}_{cam}(t)$ für die Pendel- bzw. Drehwinkelgeschwindigkeit.

Aus den zwei Messgrößen Winkelgeschwindigkeit $\dot{z}_{cam}$ und fehlerbehaftetem Winkelwert $z_{cam}$ der Kamera werden so im Zustandsvektor *x(t)* des Beobachters die drei benötigten Größen Winkelgeschwindigkeit $\dot{z}$, tatsächlicher, vom systematischen Fehler befreiter Winkel z, also der fehlerfreie Pendelwinkel $\varphi$ und Skew-Winkel $\psi$, und der Fehler $z_{off}$ ermittelt.

Die ermittelten fehlerfreien Winkel $\varphi$, $\psi$+ werden anschließend zusammen mit den Winkelgeschwindigkeiten an in den Figuren ebenfalls nicht dargestellte, dem Kran 1 zugeordnete Regelungseinrichtungen übergeben. Dabei wird an eine Regelungseinrichtung, die einer schwingungsdämpfenden Regelung der Pendelbewegung des Containers 5 dient, der erfindungsgemäß von dem systematischen Fehler befreite Pendelwinkel $\varphi$ und die Pendelwinkelgeschwindigkeit übergeben. An eine zweite Regelungseinrichtung, die der schwingungsdämpfenden Regelung der Skew-Bewegung des Containers 5 dient, wird der erfindungsgemäß von dem systematischen Fehler befreite Skew-Winkel $\psi$ und die Skew-WinkelGeschwindigkeit übergeben.

Die Regelungseinrichtungen führen auf Basis der fehlerfreien Winkelwerte eine zuverlässige schwingungsdämpfende Regelung der Bewegung des Containers 5 durch, so dass ein sicherer Betrieb des Krans 1 gewährleistet ist.

Alternativ zu der hier dargestellten Ausführungsform kann auch eine Regelungseinrichtung zum Einsatz kommen, welche eine schwingungsdämpfende Regelung sowohl der Pendelbewegung als auch der Skew-Bewegung des Containers 5 ermöglicht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

**1.** Verfahren zur Bestimmung zumindest eines Pendelwinkels ($\varphi$) und/oder Drehwinkels ($\psi$) einer an einem Kran (1) über wenigstens ein seilartiges Befestigungsmittel (4) aufgenommenen Last (5), wobei der Kran (1) einen Ausleger (2) und eine entlang des Auslegers (2) mittels einer Antriebseinrichtung linear bewegbare Laufkatze (3) aufweist, an welcher die Last (5) über das wenigstens eine seilartige Befestigungsmittel (4) befestigt ist, und an dem Kran (1) wenigstens eine optische Erfassungseinrichtung (6) zur Erfassung eines Pendelwinkels ($\varphi$) und/oder Drehwinkels ($\psi$) der Last (5) vorgesehen ist, bei dem

- mittels der wenigstens einen optischen Erfassungseinrichtung (6) ein Pendelwinkel ($\varphi$) und/oder Drehwinkel ($\psi$) der Last (5) erfasst wird,

**dadurch gekennzeichnet, dass**

- angenommen wird, dass der erfasste Pendelwinkel ($\varphi$) und/oder Drehwinkel ($\psi$) mit einem durch die wenigstens eine optischen Erfassungseinrichtung (6) bedingten systematischen Fehler behaftet ist, wobei ein mathematisches Modell zum Einsatz kommt, in dem berücksichtigt ist, dass der Pendelwinkel und/oder der Drehwinkel einen Fehler aufweisen kann, und
- der Wert des systematischen Fehlers, mit dem der erfasste Pendelwinkel ($\varphi$) und/oder Drehwinkel ($\psi$) behaftet ist, ermittelt wird.

**2.** Verfahren nach Anspruch 1,
**dadurch gekennzeichnet, dass** der fehlerfreie Pendelwinkel ($\varphi$) und/oder Drehwinkel ($\psi$) ermittelt wird.

**3.** Verfahren nach Anspruch 1 oder 2,
**dadurch gekennzeichnet, dass** mittels der wenigstens einen optischen Erfassungseinrichtung (6) eine der zeitlichen Ableitungen des Pendelwinkels ($\varphi$) und/oder Drehwinkels ($\psi$) erfasst wird.

**4.** Verfahren nach einem der vorhergehenden Ansprüche, **dadurch gekennzeichnet, dass** angenommen wird, dass der mit der wenigstens einen optischen Erfassungseinrichtung (6) erfasste Pendelwinkel ($\varphi$) gleich der Summe aus dem fehlerfreien Pendelwinkel ($\varphi$) und einem Fehlerwert ist und/oder der mit der wenigstens einen optischen Erfassungseinrichtung (6) erfasste Drehwinkel ($\psi$) gleich der Summe aus dem fehlerfreien Drehwinkel ($\psi$) und einem Fehlerwert ist.

**5.** Verfahren nach einem der vorhergehenden Ansprüche, **dadurch gekennzeichnet, dass** angenommen wird, dass der systematische Fehler, mit dem der erfasste Pendelwinkel ($\varphi$) und/oder Drehwinkel ($\psi$) behaftet ist, zeitlich konstant ist oder sich quasistatisch in Abhängigkeit der Länge des wenigstens einen seilartigen Befestigungsmittels (4), über welches die Last (5) an der Laufkatze (3) befestigt ist, ändert.

**6.** Verfahren nach einem der vorhergehenden Ansprüche, **dadurch gekennzeichnet, dass** wenigstens ein regelungstechnisches Beobachtermodell verwendet wird, um den Wert des systematischen Fehlers, mit dem der gemessene Pendelwinkel ($\varphi$) und/oder Drehwinkel ($\psi$) behaftet ist, und/oder den fehlerfreien Pendelwinkel ($\varphi$) und/oder fehlerfeien Drehwinkel ($\psi$) zu ermitteln.

**7.** Verfahren nach Anspruch 6,
**dadurch gekennzeichnet, dass** wenigstens ein regelungstechnisches Beobachtermodell verwendet wird, welches um ein Fehlermodell erweitert ist.

**8.** Verfahren nach Anspruch 7,
**dadurch gekennzeichnet, dass** wenigstens ein regelungstechnisches Beobachtermodell verwendet wird, in dem das Fehlermodell mit Bewegungsgleichungen für Pendelbewegungen und/oder Drehbewegungen der Last (5) kombiniert ist.

**9.** Verfahren nach Anspruch 8,
**dadurch gekennzeichnet, dass** ein regelungstechnisches Beobachtermodell verwendet wird, welches zumindest den Pendelwinkel ($\varphi$), eine der zeitlichen Ableitungen des Pendelwinkels ($\varphi$) und den systematischen Fehler, mit dem der Pendelwinkel ($\varphi$) behaftet ist, als Zustandsgrößen umfasst und/oder ein regelungstechnisches Beobachtermodell verwendet wird, welches zumindest den Drehwinkel ($\psi$), eine der zeitlichen Ableitungen des Drehwinkels ($\psi$) und den systematischen Fehler, mit dem der Drehwinkel ($\psi$) behaftet ist, als Zustandsgrößen umfasst.

**10.** Verfahren zur Dämpfung von Pendelbewegungen und/oder Drehbewegungen einer an einem Kran (1) über wenigstens ein seilartiges Befestigungsmittel (4) aufgenommenen Last (5), wobei der Kran (1) einen Ausleger (2) und eine entlang des Auslegers (2) mittels einer Antriebseinrichtung linear bewegbare Laufkatze (3) aufweist, an welcher die Last (5) über das wenigstens eine seilartige Befestigungsmittel (4) befestigt ist, und an dem Kran (1) wenigstens eine optische Erfassungseinrichtung (6) zur Erfassung eines Pendel- und/oder Drehwinkels ($\varphi$, $\psi$) der Last vorgesehen ist, und wobei dem Kran (1) wenigstens eine Regelungseinrichtung zur Dämpfung von Pendelbewegungen und/oder Drehbewegungen der Last (5) zugeordnet ist, umfassend die Schritte:

- über das Verfahren nach einem der Ansprüche 1 bis 9 wird der fehlerfreie Pendelwinkel ($\varphi$) und/oder der Wert des systematischen Fehlers, mit dem der erfasste Pendelwinkel ($\varphi$) behaftet ist, ermittelt und/oder über das Verfahren nach einem der Ansprüche 1 bis 9 wird der fehlerfreie Drehwinkel ($\psi$) und/oder der Wert des systematischen Fehlers, mit dem der Drehwinkel ($\psi$) behaftet ist, ermittelt,
- der fehlerfreie Pendelwinkel ($\varphi$) und/oder der Wert des Fehlers, mit dem der erfasste Pendelwinkel ($\varphi$) behaftet ist, wird an die wenigstens eine Regelungseinrichtung übergeben, und/oder der fehlerfreie Drehwinkel ($\psi$) und/oder der Wert des Fehlers, mit dem der erfasste Drehwinkel ($\psi$) behaftet ist, wird an die selbe oder eine weitere Regelungseinrichtung übergeben, und
- mittels der wenigstens einen Regelungseinrichtung wird auf Basis des fehlerfreien Pendelwinkels ($\varphi$) und/oder des Wertes des Fehlers, mit dem der erfasste Pendelwinkel ($\varphi$) behaftet ist, die Pendelbewegung der Last (5) gedämpft und/oder auf Basis des fehlerfreien Drehwinkels ($\psi$) und/oder des Wertes des Fehlers, mit dem der

erfasste Drehwinkel ($\psi$) behaftet ist, die Drehbewegung der Last (5) gedämpft.

11. Verfahren nach Anspruch 10,
**dadurch gekennzeichnet, dass** zusätzlich eine der zeitlichen Ableitungen des Pendelwinkels ($\varphi$) und/oder Drehwinkels ($\psi$), insbesondere die Pendelwinkelgeschwindigkeit und/oder Drehwinkelgeschwindigkeit, ermittelt und an die wenigstens eine Regelungseinrichtung übergeben wird.

12. Kran (1) mit einem Ausleger (2), mit einer entlang des Auslegers (2) mittels einer Antriebseinrichtung linear bewegbaren Laufkatze (3), an welcher eine Last (5) über wenigstens ein seilartiges Befestigungsmittel (4) befestigt ist, mit wenigstens einer optischen Erfassungseinrichtung (6) zur Erfassung eines Pendelwinkels ($\varphi$) und/oder Drehwinkels ($\psi$) der Last (5), mit wenigstens einer Recheneinrichtung, welche ausgebildet ist, um das Verfahren nach einem der Ansprüche 1 bis 9 durchzuführen und mit wenigstens einer Regelungseinrichtung, die ausgebildet ist, um auf Basis des über das Verfahren ermittelten fehlerfreien Pendelwinkels ($\varphi$) und/oder des Fehlers, mit dem der erfasste Pendelwinkel ($\varphi$) behaftet ist, die Pendelbewegung der Last (5) zu dämpfen und/oder auf Basis des über das Verfahren ermittelten fehlerfreien Drehwinkels ($\psi$) und/oder des Fehlers, mit dem der erfasste Drehwinkel ($\psi$) behaftet ist, die Drehbewegung der Last (5) zu dämpfen.

**Claims**

1. Method for determining at least one pendulum angle ($\varphi$) and/or angle of rotation ($\psi$) of a load (5) attached to a crane (1) via at least one cable-based fastening means (4), wherein the crane (1) has a jib (2) and a trolley (3) which can be moved linearly along the jib (2) by means of a drive facility, to which the load (5) is fastened via the at least one cable-based fastening means (4), and there is provision on the crane (1) for at least one optical detection facility (6) for detecting a pendulum angle ($\varphi$) and/or angle of rotation ($\psi$) of the load (5), in which

   - a pendulum angle ($\varphi$) and/or angle of rotation ($\psi$) of the load (5) is detected by means of the at least one optical detection facility (6),

   **characterised in that**

   - it is assumed that the detected pendulum angle ($\varphi$) and/or angle of rotation ($\psi$) is subject to a systematic error caused by the at least one optical detection facility (6), wherein a mathematic model is deployed which takes into account that the pendulum angle and/or the angle of rotation can contain an error, and
   - the value of the systematic error, to which the detected pendulum angle ($\varphi$) and/or angle of rotation ($\psi$) is subject, is established.

2. Method according to claim 1,
**characterised in that** the error-free pendulum angle ($\varphi$) and/or angle of rotation ($\psi$) is established.

3. Method according to claim 1 or 2,
**characterised in that** one of the temporal derivations of the pendulum angle ($\varphi$) and/or angle of rotation ($\psi$) is detected by means of the at least one optical detection facility (6).

4. Method according to one of the preceding claims, **characterised in that** it is assumed that the pendulum angle ($\varphi$) detected by the at least one optical detection facility (6) is equal to the sum of the error-free pendulum angle ($\varphi$) and an error value and/or the angle of rotation ($\psi$) detected by the at least one optical detection facility (6) is equal to the sum of the error-free angle of rotation ($\psi$) and an error value.

5. Method according to one of the preceding claims, **characterised in that** it is assumed that the systematic error, to which the detected pendulum angle ($\varphi$) and/or angle of rotation ($\psi$) is subject, is temporally constant or changes quasi-statically as a function of the length of the at least one cable-based fastening means (4), via which the load (5) is fastened to the trolley (3).

6. Method according to one of the preceding claims, **characterised in that** at least one control engineering-based observer model is used, in order to establish the value of the systematic error, to which the measured pendulum angle ($\varphi$) and/or angle of rotation ($\psi$) is subject, and/or the error-free pendulum angle ($\varphi$) and/or error-free angle of rotation ($\psi$).

**7.** Method according to claim 6,
**characterised in that** at least one control engineering-based observer model is used, which is expanded by an error model.

**8.** Method according to claim 7,
**characterised in that** at least one control engineering-based observer model is used, in which the error model is combined with movement equations for pendular movements and/or rotary movements of the load (5).

**9.** Method according to claim 8,
**characterised in that** a control engineering-based observer model is used, which comprises at least the pendulum angle ($\varphi$), one of the temporal derivations of the pendulum angle ($\varphi$) and the systematic error, to which the pendulum angle ($\varphi$) is subject, as status parameters and/or a control engineering-based observer model is used, which comprises at least the angle of rotation ($\psi$), one of the temporal derivations of the angle of rotation ($\psi$) and the systematic error, to which the angle of rotation ($\psi$) is subject, as status parameters.

**10.** Method for damping the pendular movements and/or rotary movements of a load (5) attached to a crane (1) via at least one cable-based fastening means (4), wherein the crane (1) has a jib (2) and a trolley (3) which can be moved linearly along the jib (2) by means of a drive facility, to which the load (5) is fastened via the at least one cable-based fastening means (4), and there is provision on the crane (1) for at least one optical detection facility (6) for detecting a pendulum angle and/or angle of rotation ($\varphi,\psi$) of the load (5), and wherein the crane (1) is assigned at least one regulation facility for damping the pendular movements and/or rotary movements of the load (5), comprising the steps:

- the error-free pendulum angle ($\varphi$) and/or the value of the systematic error, to which the detected pendulum angle ($\varphi$) is subject, is established via the method according to one of claims 1 to 9 and/or the error-free angle of rotation ($\psi$) and/or the value of the systematic error, to which the detected angle of rotation ($\psi$) is subject, is established via the method according to one of claims 1 to 9,
- the error-free pendulum angle ($\varphi$) and/or the value of the error, to which the detected pendulum angle ($\varphi$) is subject, is transmitted to the at least one regulation facility, and/or the error-free angle of rotation ($\psi$) and/or the value of the error, to which the angle of rotation ($\psi$) is subject, is transmitted to the same or a further regulation facility, and
- by means of the at least one regulation facility, the pendular movement of the load (5) is damped on the basis of the error-free pendulum angle ($\varphi$) and/or the value of the error, to which the detected pendulum angle ($\varphi$) is subject and/or the rotary movement of the load (5) is damped on the basis of the error-free angle of rotation ($\psi$) and/or the value of the error, to which the detected angle of rotation ($\psi$) is subject.

**11.** Method according to claim 10,
**characterised in that** one of the temporal derivations of the pendulum angle ($\varphi$) and/or angle of rotation ($\psi$), in particular the pendular angular speed and/or rotary angular speed, is established in addition and transmitted to the at least one regulation facility.

**12.** Crane (1) with a jib (2), with a trolley (3) which can be moved linearly along the jib (2) by means of a drive facility, to which a load (5) is fastened via at least one cable-based fastening means (4), with at least one optical detection facility (6) for detecting a pendulum angle ($\varphi$) and/or angle of rotation ($\psi$) of the load (5), with at least one computing facility which is configured to perform the method according to one of claims 1 to 9, and with at least one regulation facility which is configured to damp the pendular movement of the load (5) on the basis of the error-free pendulum angle ($\varphi$) established via the method and/or the error, to which the detected pendulum angle ($\varphi$) is subject, and/or to damp the rotary movement of the load (5) on the basis of the error-free angle of rotation ($\psi$) established via the method and/or the error, to which the detected angle of rotation ($\psi$) is subject.

**Revendications**

**1.** Procédé de détermination d'au moins un angle ($\varphi$) d'oscillation et/ou d'un angle ($\psi$) de rotation d'une charge (5) prise par une grue (1), par l'intermédiaire d'au moins un moyen (4) de fixation de type à câble, la grue (1) ayant une flèche (2) et un chariot (3) roulant, qui est mobile linéairement le long de la flèche (2) au moyen d'un dispositif d'entraînement et auquel la charge (5) est fixée par le au moins un moyen (4) de fixation de type à câble, et il est prévu, sur la grue (1), au moins un dispositif (6) optique de détection pour détecter un angle ($\varphi$) d'oscillation et/ou un angle ($\psi$) de rotation de la charge (5), dans lequel

- on détecte un angle (φ) d'oscillation et/ou un angle (ψ) de rotation de la charge (5) au moyen du au moins un dispositif (6) optique de détection,

**caractérisé en ce que**

- on suppose que l'angle (φ) d'oscillation et/ou l'angle (ψ) de rotation détecté est entaché d'une erreur systématique due au au moins un dispositif (6) optique de détection, un modèle mathématique, dans lequel il est pris en compte que l'angle d'oscillation et/ou l'angle de rotation peut présenter une erreur, étant utilisé et
- on détermine la valeur de l'erreur systématique, dont l'angle (φ) d'oscillation et/ou l'angle (ψ) de rotation détecté est entaché.

2. Procédé suivant la revendication 1,
**caractérisé en ce que** l'on détermine l'angle (φ) d'oscillation et/ou l'angle (ψ) de rotation sans erreur.

3. Procédé suivant la revendication 1 ou 2,
**caractérisé en ce que** l'on détecte, au moyen du au moins un dispositif (6) optique de détection, l'une des dérivées en fonction du temps, de l'angle (φ) d'oscillation et/ou de l'angle (ψ) de rotation.

4. Procédé suivant l'une des revendications précédentes, **caractérisé en ce que** l'on suppose que l'angle (φ) d'oscillation détecté par le au moins un dispositif (6) optique de détection est égal à la somme de l'angle (φ) d'oscillation sans erreur et d'une valeur d'erreur et/ou que l'angle (ψ) de rotation détecté au moyen d'un dispositif (6) optique de détection est égal à la somme de l'angle (ψ) de rotation sans erreur et d'une valeur d'erreur.

5. Procédé suivant l'une des revendications précédentes, **caractérisé en ce que** l'on suppose que l'erreur systématique, dont l'angle (φ) d'oscillation et/ou l'angle (ψ) de rotation détecté est entaché, est constante dans le temps ou se modifie d'une manière quasi-statique en fonction de la longueur du au moins un moyen (4) de fixation de type à câble, par lequel la charge (5) est fixée au chariot (3) roulant.

6. Procédé suivant l'une des revendications précédentes, **caractérisé en ce que** l'on utilise au moins un modèle d'observateur en technique de régulation pour déterminer la valeur de l'erreur systématique, dont est entaché l'angle (φ) d'oscillation et/ou l'angle (ψ) de rotation mesuré et/ou l'angle (φ) d'oscillation sans erreur et/ou l'angle (ψ) de rotation sans erreur.

7. Procédé suivant la revendication 6,
**caractérisé en ce que** l'on utilise au moins un modèle d'observateur en technique de régulation, qui est agrandi d'un modèle d'erreur.

8. Procédé suivant la revendication 7,
**caractérisé en ce que** l'on utilise au moins un modèle d'observateur en technique de régulation, dans lequel le modèle d'erreur est combiné à des équations de mouvements d'oscillation et/ou de mouvements de rotation de la charge (5).

9. Procédé suivant la revendication 8,
**caractérisé en ce que** l'on utilise un modèle d'observateur de régulation, qui comprend comme grandeurs d'état, au moins l'angle (φ) d'oscillation, l'une des dérivés en fonction du temps de l'angle (φ) d'oscillation et l'erreur systématique, dont l'angle (φ) d'oscillation est entaché et/ou on utilise un modèle d'observateur en technique de régulation, qui comprend comme grandeurs d'état, au moins l'angle (ψ) de rotation, une dérivée en fonction du temps de l'angle (ψ) de rotation et l'erreur systématique, dont l'angle (ψ) de rotation est entaché.

10. Procédé d'amortissement de mouvements oscillants et/ou de mouvements de rotation d'une charge prise sur une grue (1) par au moins un moyen (4) de fixation de type à câble, la grue (1) ayant une flèche (2) et un chariot (3) roulant, qui peut se déplacer linéairement le long de la flèche (2) au moyen d'un dispositif d'entraînement et auquel la charge (5) est fixée par le au moins un moyen (4) de fixation de type à câble, et il est prévu sur la grue (1) au moins un dispositif (6) optique de détection d'un angle (φ, ψ) d'oscillation et/ou de rotation de la charge, et le au moins un dispositif de régulation pour amortir des mouvements oscillants et/ou des mouvements de rotation de la charge (5) est associé à la grue (1), comprenant les stades :

- par le procédé suivant l'une des revendications 1 à 9, on détermine l'angle (φ) sans erreur et/ou la valeur de l'erreur systématique, dont l'angle ($\varphi$) d'oscillation détecté est entaché, et/ou par le procédé suivant l'une des revendications précédentes 1 à 9, on détermine l'angle ($\psi$) de rotation sans erreur et/ou la valeur de l'erreur systématique, dont l'angle ($\psi$) de rotation est entaché et

- on transmet au au moins un dispositif de régulation, l'angle ($\varphi$) d'oscillation sans erreur et/ou la valeur de l'erreur, dont l'angle ($\varphi$) d'oscillation détecté est entaché et/ou on transmet au même dispositif de régulation ou à un autre dispositif de régulation, l'angle ($\psi$) de rotation sans erreur et/ou la valeur de l'erreur, dont l'angle ($\psi$) de rotation détecté est entaché et

- au moyen du au moins un dispositif de régulation, on amortit sur la base de l'angle ($\varphi$) d'oscillation sans erreur et/ou de la valeur de l'erreur, dont l'angle ($\varphi$) d'oscillation détecté est entaché, le mouvement d'oscillation de la charge (5) et/ou on amortit le mouvement de rotation de la charge (5) sur la base de l'angle ($\psi$) de rotation sans erreur et/ou de la valeur de l'erreur, dont est entaché l'angle ($\psi$) de rotation détecté.

11. Procédé suivant la revendication 10,
**caractérisé en ce que** l'on détermine, en outre, une dérivée en fonction du temps, de l'angle ($\varphi$) d'oscillation et/ou de l'angle ($\psi$) de rotation, notamment la vitesse de variation de l'angle d'oscillation et/ou la vitesse de variation de l'angle de rotation et on la transmet au au moins un dispositif de régulation.

12. Grue (1) ayant une flèche (2), un chariot (3) roulant, qui peut se déplacer linéairement le long de la flèche (3) au moyen d'un dispositif d'entraînement et auquel une charge (5) est fixée par au moins un moyen (4) de fixation de type à câble, au moins un dispositif (6) optique de détection d'un angle ($\varphi$) d'oscillation et/ou d'un angle ($\psi$) de rotation de la charge (5), au moins un dispositif informatique constitué pour effectuer le procédé suivant l'une des revendications 1 à 9 et au moins un dispositif de régulation constitué pour amortir le mouvement d'oscillation de la charge (5) sur la base de l'angle ($\varphi$) d'oscillation sans erreur déterminée par le procédé et/ou de l'erreur, dont est entaché l'angle ($\varphi$) d'oscillation détecté et/ou pour amortir le mouvement de rotation de la charge (5), sur la base de l'angle ($\psi$) de rotation sans erreur déterminée par le procédé et/ou de l'erreur, dont l'angle ('If) de rotation détecté est entaché.

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004031068 A1